# EUROPEAN PATENT APPLICATION

(11) **EP 0 940 318 A2**
(43) Date of publication of application: **08.09.1999**
(21) Application number: 99103740.9
(22) Date of filing: 26.02.1999
(51) Int. Cl.: B62D 11/08

(54) **Transmission and steering device for tracked vehicles and for vehicles provided with non-steering wheels**

(30) Priority: 02.03.1998 IT VI980041
(71) Applicant: Fort S.r.l., 36040 Sossano (VI) (IT)
(72) Inventor: Feligioni, Luigi, 18015 Riva Ligure (Imperia) (IT)
(74) Representative: Forattini, Amelia

(57) **Abstract**

A transmission and steering device for tracked vehicles and for vehicles with non-steering wheels, including a set of transmission belts (2, 3, 4) to be actuated individually which connect the propulsion means of the vehicle to a multiple-race idler pulley (5); the set is provided with a pair of transmission and steering belts (6, 7) which connect the pulley (5) to irreversible motion transmission components (8, 9), such as worm screw reduction units, which are in turn associated with the ground traction means (10, 11), such as tracks and the like. The pair of belts (6, 7) is kept tensioned by at least four tensioning jockey pulleys which can be alternatively disengaged; each jockey pulley (28, 29, 30, 31) is mounted on rockers (22, 23, 24, 25) which are pivoted to the chassis of the vehicle and are moved by lever systems on the handlebar.

## Description

The present invention relates to a transmission and steering device for tracked vehicles and for vehicles provided with non-steering wheels, which is particularly but not exclusively useful in mini-dumpers used for light transport in the building sector, in agriculture and in gardening.

It is known that many tracked vehicles and vehicles with non-steering wheels can turn by selectively locking the right or left track.

The transmission and steering devices used in these vehicles are currently composed of a gearbox with one or more forward speeds and a reverse speed which drives the axles of the tracks, which are equipped with brakes, by virtue of a clutch or by virtue of disengageable ratchet systems.

An axle is therefore locked in the following two separate operations:
-- disengagement of the clutch or ratchet system of the involved axle;
-- braking of the axle.

This method leads to a turning action which is jerky and cannot be modulated indeed because the two operations cannot occur simultaneously. This fact is disadvantageous in many cases but most of all when, for example, the operator must drive this type of vehicle in confined spaces which require slow and precise movements of the vehicle.

From the constructive point of view, the components that provide these operations are always arranged after the gearbox and therefore operate with high torques at low rotation rates, and this, in the long term, compromises their durability.

Furthermore, these components are rather expensive due to their constructive and operating complexity.

Moreover, these devices, in case of failure of the transmission upstream, do not ensure parking of the vehicle, since the brakes, even if they are actuated promptly, may be worn due to prolonged use or poorly adjusted.

The aim of the present invention is to eliminate the drawbacks noted above in some conventional types of tracked vehicle by providing a transmission and steering device for tracked vehicles and vehicles with non-steering wheels, which allows uniform and modulable turning actions of any radius, so as to solve the steering problems that are typical of these vehicles.

An object of the invention is to provide a device which automatically and simultaneously performs both of the above described operations without additional controls.

Another object of the invention is to provide a device which ensures the parking of the vehicle without resorting to the actuation of additional brakes or similar components.

Another object of the invention is to provide a device which is constituted by a minimal number of mechanical components which are easily commercially available among standardized components and accordingly have an advantageous cost.

This aim, these objects and others which will become apparent hereinafter are achieved by a transmission and steering device for tracked vehicles or for vehicles with non-steering wheels, characterized in that it includes at least one multiple-race idler pulley which is kinematically connected to the engine; at least one pair of transmission and steering belts which connect the pulley to irreversible motion transmission components which are in turn associated with ground traction means of the vehicle, the belts of the pair being kept tensioned by alternatively disengageable tensioning devices.

Advantageously, the device includes a set of transmission belts to be actuated individually which connect the propulsion means to the multiple-race idler pulley.

Further characteristics and advantages of the present invention will become apparent hereinafter from the description of a preferred but not exclusive embodiment of the invention, illustrated only by way of non-limitative example in the accompanying drawings, wherein:

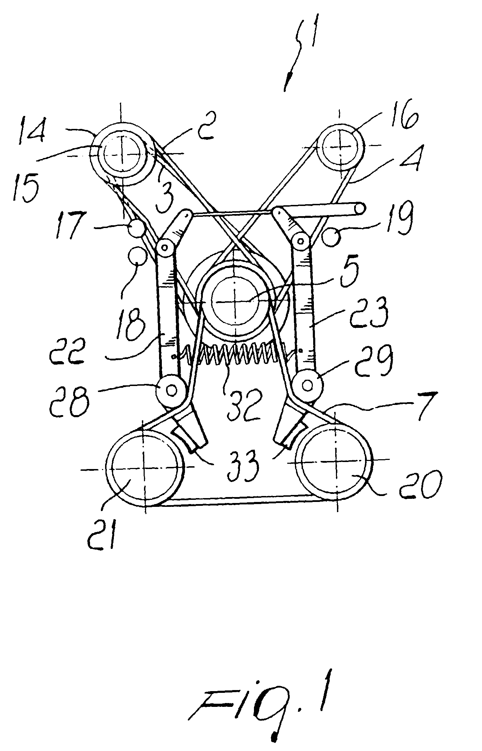

Figure 1 is a kinematic diagram of the device according to the invention;

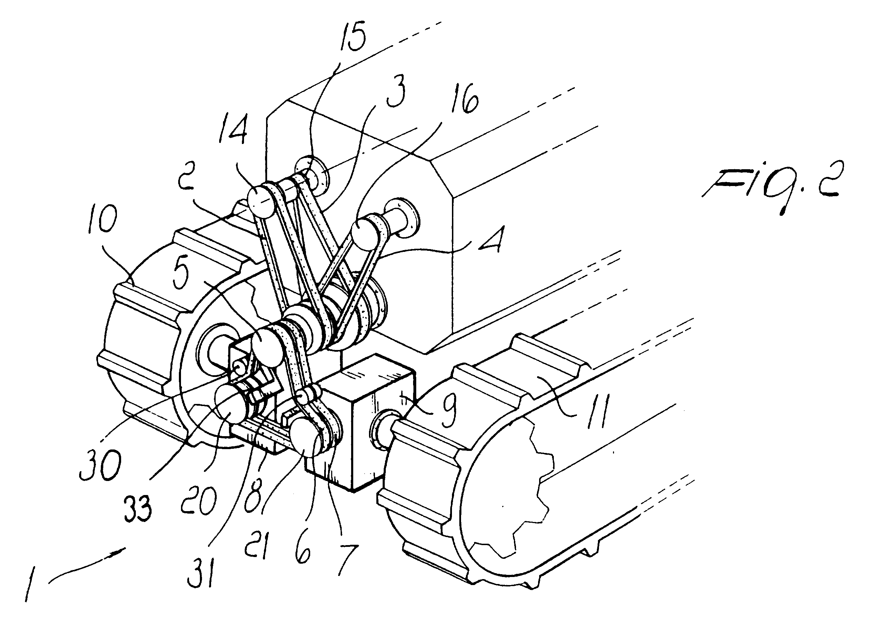

Figure 2 is a perspective view of the device of the invention;

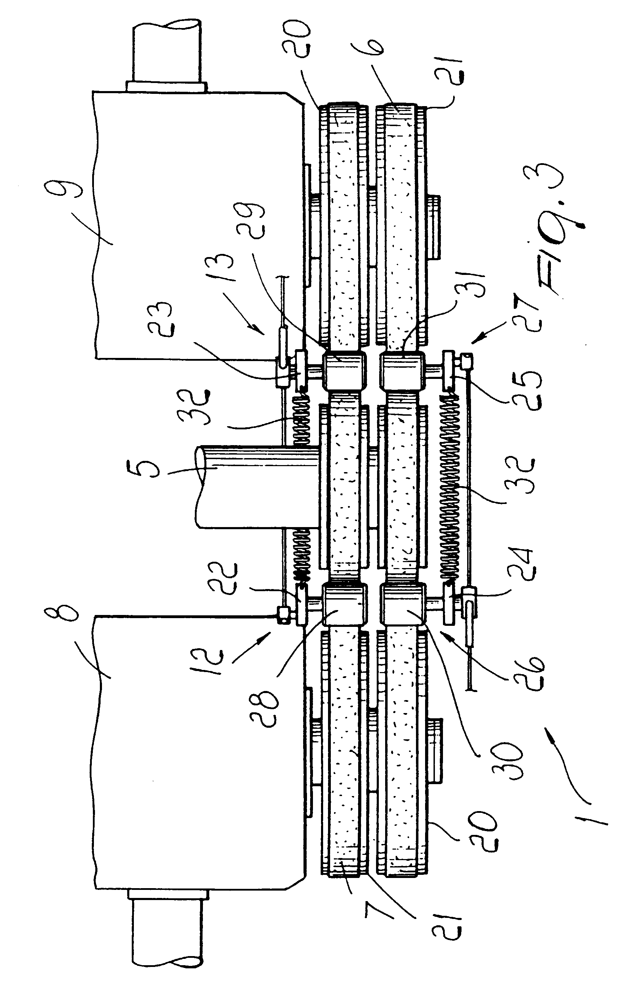

Figure 3 is a top view of the lower portion of the device;

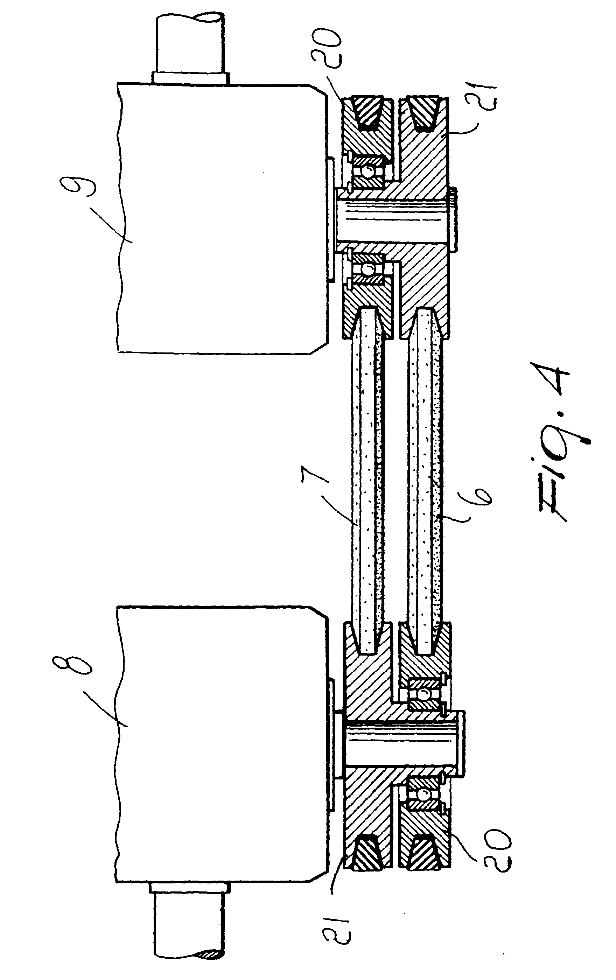

Figure 4 is a detail view of the device.

With reference to the above figures, the transmission and steering device for tracked vehicles and for vehicles with non-steering wheels, generally designated by the reference numeral 1, is constituted by at least one pair of belts 6,7 and preferebly by two sets of belts 2, 3, 4 and 6, 7, in which the speed-shift and steering functions are provided respectively; the belts interact by virtue of a multiple-race idler pulley 5. The first set is composed of at least three belts 2, 3, 4 which connect the propulsion means of the vehicle to the multiple-race pulley 5. Two of these belts 2, 3 engage pulleys 14, 15 which are keyed on the main shaft of the propulsion means, whilst the third one 4 engages a pulley 16 which is keyed on the secondary shaft, which rotates in the opposite direction with respect to the main shaft. The speeds are actuated by virtue of tensioning jockey pulleys 17, 18 and 19 which are moved by automatic-return lever systems arranged on the steering handlebar and are to be moved selectively toward the belts 2, 3 4 in order to tension them. In this manner, by moving the jockey pulley 17 toward the corresponding belt 2, the first forward speed is activated, disengaging the preceding jockey pulley, and by moving the jockey pulley 18 toward the corresponding belt 3 the second forward speed is activated, whilst by disengaging both of the above jockey pulleys and moving the jockey pulley 19 toward the belt 4, the reverse speed is activated. Essentially, when the vehicle is parked, the belts are slack and forward motion occurs only by pressing one tensioning jockey pulley at a time on the respective belt.

The second set of belts is composed of the belts 6 and 7 for connection between the multiple-race pulley 5 and the pulleys 20, 21 which are associated with each one of the input shafts of two irreversible motion transmission components 8 and 9 which are connected respectively to the left traction means 10 and to the right traction means 11 and are characterized by a high transmission ratio.

In this embodiment, advantageously the irreversible components are a pair of worm-screw reduction units with a transmission ratio of at least 50.

For constructive reasons, the pulleys 21 and 20 mounted on each input shaft of the reduction units are respectively rigidly coupled to the shaft and rotatable on the pulley 21. In this case, on the input shaft of the left reduction unit 8 the inner pulley 21 is rigidly coupled whilst the outer one can rotate, and on the shaft of the right reduction unit 9 the outer pulley 21 is rigidly coupled whilst the inner one can rotate. The pulleys 20 and 21 accommodate the transmission and steering belts 6 and 7, which are kept constantly tensioned by four tensioning devices 12, 13, 26 and 27. The tensioning devices include four rockers 22, 23, 24 and 25, two of which, designated by the reference numerals 22 and 23, are arranged to the rear of the belts 6 and 7, whilst the other two, designated by the reference numerals 24 and 25, are arranged in front of the first two.

The rockers are arranged substantially vertically and are pivoted to the chassis toward the upper end, so that they can rotate through a certain angle about their fulcrums. Four tensioning jockey pulleys 28, 29, 30 and 31 are pivoted at right angles thereon and are arranged so as to act on the inclined portions of each one of the transmission and steering belts 6 and 7 from the outside inward. The tensioning devices 12, 13, 26 and 27 furthermore include two springs 32 which are arranged horizontally, approximately at the height of the jockey pulleys 28 and 29, 30 and 31: one is coupled to the rear rockers 22 and 23, whilst the other one is coupled to the front rockers 24 and 25. The action of these springs 32 keeps the jockey pulleys 28, 29, 30 and 31 continuously pressed against the belts 6 and 7 to keep them tensioned. The tensioning devices 12, 13, 26 and 27 are controlled by virtue of two levers (not shown) on the steering handlebar which are connected by cables respectively to the upper ends of the rear rockers 22 and 23 and of the front rockers 24 and 25. In this manner, by acting on each one of the levers, the corresponding pairs of rockers 22, 23 and 24, 25 open in a scissorlike fashion, disengaging either the rear tensioning devices 12, 13 or the front ones 26 and 27. In this case, to prevent the slack belt 6, 7 from turning the pulleys 20, 21 that accommodate it, there are brake blocks 33 on the lower tabs of each rocker 22, 23, 24 and 25 which act on the outer surface of the pulleys 20 and 21.

Finally, the device 1 is provided with screw-type adjustment devices to facilitate its tuning.

The operation of the device is as follows:
with reference to the above figures, assume that the vehicle is to travel forward: in this case, the first or second speed is activated by virtue of separate levers on the handlebar, which act on the corresponding jockey pulleys 17, 18, tensioning the corresponding belts 2, 3. One of the belts 2, 3 turns the idler pulley 5, which moves the belts 6, 7, which in turn transmit their motion by virtue of the pulleys 20, 21 and the reduction units 8, 9 to the ground traction means 10, 11. In the same manner the reverse speed is activated by acting on the corresponding lever on the handlebar, which moves the jockey pulley 19, which in turn acts on the corresponding belt 4, which turns the idler pulley 5, which in turn moves the belts 6, 7 which, by virtue of the pulleys 20, 21 and the reduction units 8, 9, actuate the ground traction means 10, 11.

In the case of a left turn both during forward travel and during reversing, by acting on the handlebar lever the two rear tensioning devices 12 and 13 are disengaged; the rockers 22 and 23 of these devices open in a scissorlike fashion, so as to slacken the inner transmission and steering belt 7. In this manner, the belt 7 slips on its pulleys 20 and 21, particularly on the pulley 21 which is rigidly coupled to the main shaft of the left reduction unit 8, so that the left traction means 10 remains motionless and constitutes the pivot of the turn. The outer belt is instead tensioned and turns the pulley 21, which is rigidly coupled to the main shaft of the right reduction unit 9, which in turn moves the right traction means 11 by virtue of the secondary shaft.

In the case of a right turn, both during forward travel and during reversing, by virtue of the lever located on the handlebar the front tensioning devices 26 and 27 are disengaged. The devices 26 and 27 act on the outer belt 6, the rockers 24 and 25 of which open in a scissorlike fashion, so as to slacken the belt. In this manner, the belt 6 slips on its pulleys 20 and 21, particularly on the pulley 21 which is rigidly coupled to the shaft of the right reduction unit 9, so that the right traction means remains motionless and constitutes the pivot of the turn.

The inner belt 7 is instead tensioned and turns its own pulleys 20, 21 and particularly the pulley 21, which is rigidly coupled to the input shaft of the left reduction unit 8, which moves the left traction means 10 by virtue of the secondary shaft.

In both cases, the nonrotating pulleys 20, 21, due to the slackness of the respective belt 6, 7, are braked by the brake blocks 33, which act on the pulleys 20, 21 when the tensioning devices 12, 13 and 26, 27 are disengaged. In practice it has been found that the invention achieves the intended aim and objects, since the adoption of this device allows tracked vehicles to be more maneuverable, versatile and functional with respect to the requirements of their operators; the steering action that can be provided with the illustrated device can in fact be modulated and is linear, greatly improving the control of this type of vehicle. Furthermore, the adoption of irreversible motion transmission devices acts in favor of the safety of the operator in case of malfunctions affecting the primary transmission, especially in heavy-duty conditions, such as terrain which is particularly rough and/or characterized by steep slopes. Finally, the relative constructive simplicity of the device allows to offer it to clients at an extremely advantageous price and allows quick and easy tuning interventions due to ordinary and extraordinary maintenance.

The invention is susceptible of numerous modifications and variations, all of which are within the scope of the inventive concept.

All the details may furthermore be replaced with technically equivalent elements.

The materials used, as well as the dimensions, may of course be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A transmission and steering device for tracked vehicles and for vehicles with non-steering wheels, characterized in that it comprises at least one multiple-race idler pulley (5) which is kinematically connected to the engine; at least one pair of transmission and steering belts (6, 7) which connect said pulley (5) to irreversible motion transmission components (8, 9) which are in turn associated with the ground traction means (10, 11), said belts (6, 7) of said pair being kept tensioned by tensioning devices (12, 13, 26, 27) which can be alternatively disengaged.

2. The device according to claim 1, characterized in that it comprises a set of transmission belts (2, 3, 4) to be actuated individually which connect the propulsion means of the vehicle to said multiple-race idler pulley (5).

3. The device according to claim 2, characterized in that said propulsion means has a pair of shafts which are provided, at one end, with pulleys (14, 15, 16) which have different diameters and are engaged by said set of transmission belts (2, 3, 4), said shafts rotating in opposite directions.

4. The device according to claim 2, characterized in that it comprises tensioning jockey pulleys (17, 18, 19) which are associated with said set of transmission belts (2, 3, 4) and tension one belt at a time.

5. The device according to claim 1, characterized in that said irreversible motion transmission components (8, 9) are worm-screw reduction units the main shaft of which supports a pair of pulleys (20, 21), one of said pulleys being rigidly coupled to said shaft, the other one of said pulleys being able to rotate, both of said pulleys engaging said pair of belts (6, 7), whilst the secondary shaft is directly associated with said ground traction means (10, 11).

6. The device according to claim 1, characterized in that said tensioning devices comprise at least two pairs of rockers (22, 23, 24, 25) which are pivoted to the chassis of the vehicle, each rocker supporting at least one jockey pulley (28, 29, 30, 31) for tensioning a portion of one of said belts (6, 7) of said pair, and at least one spring (32) for each pair of said rockers (22, 23 and 24, 25), said at least one spring being coupled to said rockers at its ends, at the level of said tensioning jockey pulleys (28, 29, 30, 31).

7. The device according to claim 6, characterized in that each rocker (22, 23, 24, 25) supports, at its lower end, at least one brake block (33) for said pulleys (20, 21) of the irreversible motion transmission components (8, 9).

8. The device according to one or more of the preceding claims, characterized in that it comprises a first lever system on the handlebar for the engagement and disengagement of said tensioning jockey pulleys (17, 18, 19) and a second lever system on the handlebar for the engagement and disengagement of said tensioning devices (12, 13, 26, 27).

9. The device according to claim 4, characterized in that it comprises a means suitable to adjust and tune said tensioning jockey pulleys (28, 29, 30, 31).
